# EUROPÄISCHE PATENTANMELDUNG

(11) **EP 2 286 698 A1**
(43) Veröffentlichungstag der Anmeldung: **23.02.2011**
(21) Anmeldenummer: 09168395.3
(22) Anmeldetag: 21.08.2009
(51) Int. Cl.: A47J 31/42, A47J 42/18

(54) **Mahlwerk für eine Kaffeemaschine**

(71) Anmelder: Schaerer AG, 4528 Zuchwil (CH)
(72) Erfinder: Hergesell, Harald, 3303, Jegenstorf (CH); Arndt, Peter, 89134, Blaustein (DE); Caputo, Ciro, 89173, Urspring (DE); Gussmann, Jochen, 73527, Schwäbisch Gmünd (DE); Grupp, Martin, 73779, Deizisau (DE); Kiefer, Alexander, 73329, Kuchen (DE); Stohrer, Helmut, 89075, Ulm (DE); Startz, Armin, 89197, Weidenstetten (DE)
(74) Vertreter: BOVARD AG

(57) **Zusammenfassung**

Ein Mahlwerk für eine Kaffeemaschine umfasst ein Gehäuse (2), in welchem eine erste Mahlscheibe (10) über Antriebsmittel (3) antreibbar ist. Eine zweite Mahlscheibe (14) ist nicht rotierend im Gehäuse (2) angeordnet, und über Verstellmittel (7) gegen die erste Mahlscheibe (10) anstellbar, so dass der Mahlspalt zwischen den beiden Mahlscheiben (10) und (14) veränderbar ist. Das Gehäuse (2) ist aus mindestens einem ersten Teil (24) und einem zweiten Teil (25) gebildet, die miteinander lösbar verbunden sind und die jeweils mit einer ersten Anschlagfläche (26) bzw. einer zweiten Anschlagfläche (27) ausgestattet sind, die im verbundenen Zustand aneinanderstossen. Die erste Mahlscheibe und die Antriebsmittel (3) sind im ersten Teil (24) des Gehäuses angeordnet, während die zweite Mahlscheibe (14) und die Verstellmittel (7) am zweiten Teil (25) des Gehäuses angeordnet sind. Durch diese Erfindung kann ein Mahlwerk geöffnet werden, beispielsweise zum Reinigen, nach dem Zusammensetzen des Mahlwerks weist dieses wieder den genau gleichen Mahlspalt auf, wie vor dem Reinigungsvorgang.

## Beschreibung

Die vorliegende Erfindung bezieht sich auf ein Mahlwerk für eine Kaffeemaschine, umfassend ein Gehäuse, in welchem eine erste Mahlscheibe angeordnet ist, welche über Antriebsmittel um eine Rotationsachse antreibbar ist, eine zweite Mahlscheibe, welche nicht rotierend im Gehäuse angeordnet ist, Verstellmittel, über welche die beiden Mahlscheiben gegeneinander anstellbar sind und der Mahlspalt veränderbar ist, eine Zuführöffnung für die Zuführung der zu mahlenden Kaffeebohnen und eine Wegführöffnung für das Wegführen des zwischen den beiden Mahlscheiben gemahlenen Kaffeepulvers.

Derartige Mahlwerke für Kaffeemaschinen sind bekannt, beispielsweise zeigt die EP-A 0676162 ein derartiges Mahlwerk. Bei derartigen Mahlwerken werden die Kaffeebohnen zwischen die beiden Mahlscheiben geführt, die eine Mahlscheibe wird über Antriebsmittel rotierend angetrieben, die andere Mahlscheibe ist fest stehend, zwischen diesen Mahlscheiben werden die Kaffeebohnen zu Kaffeepulver gemahlen, das gemahlene Kaffeepulver tritt radial aus dem Mahlspalt aus und wird über eine Wegführöffnung beispielsweise der Brühkammer einer Kaffeemaschine zugeführt.

Um die Feinheit des Mahlpulvers einstellen zu können, lässt sich die fest stehende Mahlscheibe gegen die angetriebene Mahlscheibe in bzw. von dieser weg bewegen, wozu diese fest stehende Mahlscheibe auf einem Einschraubteil, der in das Gehäuse einschraubbar ist, befestigt ist. Dieser Einschraubteil ist mit einem Antriebsrad versehen, welches über einen Stellantrieb bezüglich des Gehäuses verdreht werden kann, wodurch die Breite des Mahlspaltes zwischen den beiden Mahlscheiben eingestellt werden kann.

Die Feinheit des gemahlenen Kaffeepulvers bzw. die Korngrösse dieses Pulvers ist für die Qualität und für den Geschmack des Kaffees ausschlaggebend. Hierbei verlangt jede Kaffeesorte eine bestimmte Korngrösse, bei der der gebrühte Kaffee einen optimalen Geschmack aufweist. Bei einer Kaffeemaschine, die beispielsweise in einer Gaststätte im Einsatz ist, bestimmt zusätzlich auch der Gastwirt, wie der Kaffee in seiner Gaststätte schmecken soll, beispielsweise kräftig oder eher leicht, was wiederum durch das Einstellen des Mahlspalts im Mahlwerk einzustellen ist.

Derartige Kaffeemaschinen und die darin eingesetzten Mahlwerke müssen durch entsprechende Fachpersonen gewartet werden. Beispielsweise zum Reinigen der bekannten Mahlwerke muss hierzu das Antriebsrad mit der daran befestigten zweiten Mahlscheibe aus dem Gehäuse ausgeschraubt werden, nachdem das Stellrad entfernt worden ist. Das Antriebsrad mit der daran befestigten zweiten Mahlscheibe kann dann vom Gehäuse abgenommen werden, die beiden Mahlscheiben sind frei zugänglich, eine Reinigung bzw. auch eine Ersetzung der einen oder anderen Mahlscheibe ist dadurch ohne weiteres möglich. Nach dem Beendigen des Wartungsvorgangs wird das Mahlwerk wieder zusammengesetzt, das heisst, das Antriebsrad mit der daran befestigten zweiten Mahlscheibe wird wieder auf das Gehäuse aufgeschraubt, das Stellrad wird an seine ursprüngliche Position gebracht, die Mahlspaltbreite muss nun aber wieder neu eingestellt werden, was durch Versuche vorgenommen werden muss, was bedeutet, dass von der entsprechenden Kaffeemaschine Kaffees bezogen werden müssen, um deren Geschmack zu überprüfen.

Dieser Vorgang ist zumindest sehr zeitaufwändig, das Auffinden der richtigen Mahlspaltbreite ist relativ kompliziert.

Die Aufgabe der vorliegenden Erfindung besteht somit darin, ein Mahlwerk für eine Kaffeemaschine so zu gestalten, dass deren Zerlegung zur Wartung und das anschliessende Zusammenfügen problemlos ausgeführt werden kann, und dass insbesondere nach dem Zusammenfügen die ursprünglich eingestellte Mahlspaltbreite zwischen den beiden Mahlscheiben erreicht werden kann, ohne dass die Verstellmittel betätigt werden müssen.

Erfindungsgemäss erfolgt die Lösung dieser Aufgabe dadurch, dass das Gehäuse aus mindestens einem ersten Teil und einem zweiten Teil gebildet ist, die miteinander lösbar verbunden sind und die jeweils mit einer ersten Anschlagfläche bzw. einer zweiten Anschlagfläche ausgestattet sind, die im verbundenen Zustand aneinander stossen, dass die erste Mahlscheibe und die Antriebsmittel im ersten Teil des Gehäuses angeordnet sind und dass die zweite Mahlscheibe und die Verstellmittel am zweiten Teil des Gehäuses angeordnet sind.

Dadurch kann in einfacher Weise zur Wartung des Mahlwerks der erste Teil des Gehäuses mit der darin angeordneten ersten Mahlscheibe und den Antriebsmitteln vom zweiten Teil des Gehäuses, mit darin angeordneter zweiter Mahlscheibe und den Verstellmitteln, voneinander gelöst werden. Die Verstellmittel müssen nicht verstellt werden, beim Zusammenfügen der beiden Teile, und wenn die erste Anschlagfläche auf der zweiten Anschlagfläche aufliegt, entspricht die Breite des Mahlspaltes exakt wieder derjenigen Breite des Mahlspaltes, die ursprünglich eingestellt worden war.

In vorteilhafter Weise umfasst das Gehäuse einen Hohlzylinder, welcher die Mahlkammer bildet und in welchem die Wegführöffnung angeordnet ist, einen Halteteil, an welchem die Antriebsmittel angebracht sind, und ein Tragelement, das in den Hohlzylinder hineinragt und einen Aufnahmebereich für die zweite Mahlscheibe aufweist, wodurch ein einfacher Aufbau erhalten wird.

In vorteilhafter Weise bestehen die Antriebsmittel aus einem Elektromotor, welcher auf den Halteteil aufgeflanscht ist, an dessen Antriebsachse ein Aufnahmeteil befestigt ist, in welchen die erste Mahlscheibe einsetzbar ist und welcher in den Hohlzylinder hineinragt, wodurch eine genaue Positionierung der ersten Mahlscheibe im Gehäuse erreichbar ist.

In vorteilhafter Weise umfassen die Verstellmittel ein Antriebsrad, das mit einem Innengewinde ausgestattet ist und auf ein Aussengewinde aufschraubbar ist, das am dem Halteteil abgewandten Endbereich des Hohlzylinders angebracht ist, an welchem Antriebsrad das Tragelement mit einem Aufnahmebereich für die zweite Mahlscheibe angebracht ist, wodurch die zweite Mahlscheibe in einfacher Weise und exakt verstellt werden kann.

In vorteilhafter Weise umfassen die Verstellmittel ferner ein antreibbares Stellrad, welches um eine Achse drehbar in einem am Hohlzylinder befestigten Bügel gelagert ist und mit dem Antriebsrad zusammenwirkt, was einen einfachen Aufbau ergibt.

Einen einfachen Aufbau der Verstellmittel erhält man dadurch, dass das Antriebsrad als Schneckenrad und das Stellrad als Schnecke ausgebildet sind.

Eine vorteilhafte Ausgestaltung der Erfindung wird dadurch erreicht, dass der erste Teil des Gehäuses durch den Halteteil gebildet ist, an welchem die ersten Anschlagflächen vorgesehen sind, und der zweite Teil des Gehäuses durch den Hohlzylinder und das Tragelement gebildet sind, und dass die dem Tragelement abgewandte Stirnfläche des Hohlzylinders die zweite Anschlagfläche bildet, und dass im verbundenen Zustand des ersten Teils und des zweiten Teils des Gehäuses die erste Anschlagfläche und die zweite Anschlagfläche aufeinander zu liegen kommen. Dadurch wird eine einfache Trennung des Gehäuses und der beiden Mahlscheiben erreicht, welche in der vorgegebenen Position verbleiben.

In vorteilhafter Weise sind am Hohlzylinder im Bereich der Stirnfläche flanschartige Vorsprünge angebracht, durch welche die Verbindung mit dem ersten Teil des Gehäuses mittels durch die flanschartigen Vorsprünge geführte Schrauben erreichbar ist, welche in entsprechend am Halteteil angebrachte Gewindelöcher einschraubbar sind, was neben dem einfachen Aufbau auch eine einfache Handhabung zur Folge hat.

Eine andere Ausgestaltung der Erfindung kann auch dadurch erreicht werden, dass der erste Teil des Gehäuses durch den Halteteil und den Holzylinder gebildet ist und am auf den Hohlzylinder aufschraubbaren Antriebsrad die ersten Anschlagflächen angebracht sind, und der zweite Teil des Gehäuses durch das Tragelement gebildet ist, dessen dem Antriebsrad zugewandte Fläche die zweite Anschlagfläche bildet, und dass im verbundenen Zustand des ersten und zweiten Teils des Gehäuses die erste Anschlagfläche und die zweite Anschlagfläche aufeinander zu liegen kommen. Auch durch diese Trennmöglichkeit ist gewährleistet, dass die beiden Mahlscheiben genau positioniert bleiben.

Eine besonders einfache Verbindung zwischen Tragelement und Antriebsrad erhält man dadurch, dass am Tragelement ein Flansch angebracht ist, der die zweite Anschlagfläche bildet, wobei die Verbindung zwischen dem Flansch des Tragelements und dem Antriebsrad mittels Schrauben erfolgt.

Eine Ausführungsform der Erfindung wird nachfolgend anhand der beiliegenden Zeichnungen beispielhaft näher erläutert.

Es zeigt
Fig. 1 eine Ansicht auf ein erfindungsgemässes Mahlwerk für eine Kaffeemaschine mit aufgesetztem Trichter;
Fig. 2 eine Längsschnittdarstellung durch das Mahlwerk gemäss Fig. 1;
Fig. 3 eine Schnittdarstellung durch das Mahlwerk mit vom ersten Teil des Gehäuses gelösten zweiten Teil;
Fig. 4 eine Schnittdarstellung durch das Mahlwerk mit verbundenem ersten Teil und zweiten Teil des Gehäuses und vom Antriebsrad gelösten Tragelement;
Fig. 5 eine Schnittdarstellung durch das Mahlwerk entlang Linie V-V gemäss Fig. 2; und
Fig. 6 des Mahlwerks gemäss Fig. 1 entlang Linie VI-VI.

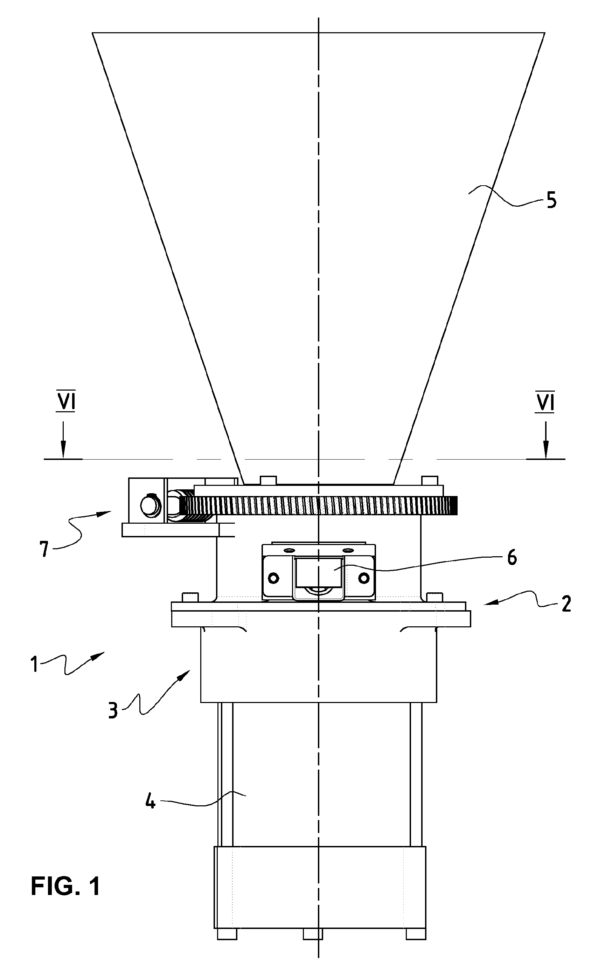

In Fig. 1 ist in einer Ansicht das Mahlwerk 1 ersichtlich, das ein Gehäuse 2 umfasst, an welchen die Antriebsmittel 3 angebracht sind, die aus einem Elektromotor 4 bestehen. Auf das Gehäuse aufgesetzt ist ein Trichter 5, über welchen die zu mahlenden Kaffeebohnen durch eine Zuführöffnung dem Mahlwerk zugeführt werden, der gemahlene Kaffee wird über eine im Gehäuse angebrachte Wegführöffnung 6 beispielsweise in eine Brüheinrichtung einer Kaffeemaschine geführt, wie später noch im Detail gesehen wird. Im oberen Bereich des Gehäuses sind Verstellmittel 7 angebracht, mit welchen die Feinheit des zu mahlenden Kaffeepulvers eingestellt werden kann, wie ebenfalls später noch im Detail beschrieben wird.

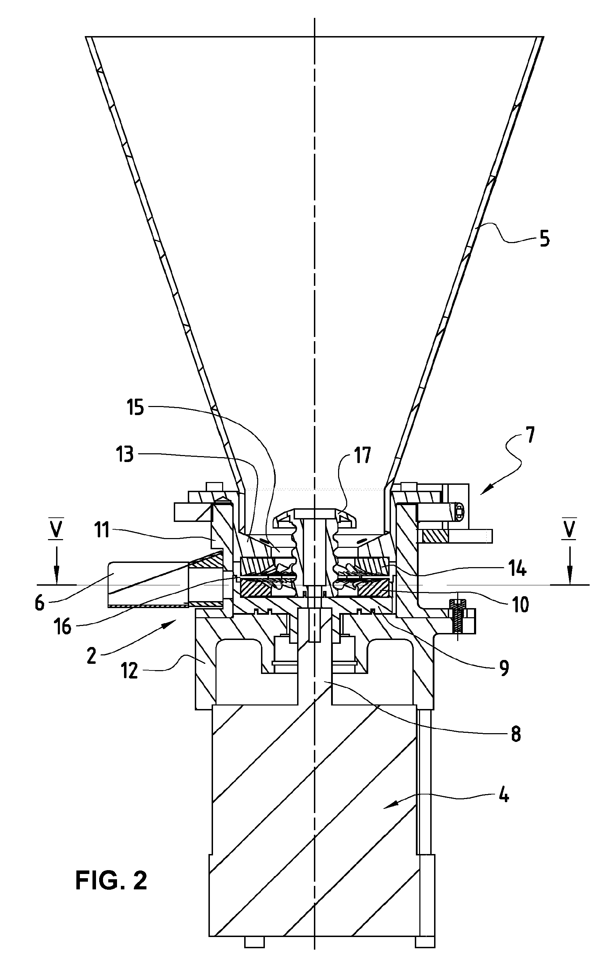

Wie aus Fig. 2 ersichtlich ist, weist der auf das Gehäuse 2 aufgesetzte Elektromotor 4 eine Antriebsachse 8 auf, an welcher ein Aufnahmeteil 9 befestigt ist, in welchen Aufnahmeteil 9 die erste Mahlscheibe 10 eingesetzt ist. Diese erste Mahlscheibe 10 liegt im Innenraum eines Hohlzylinders 11, der zusammen mit dem einen Halteteil 12, an welchem der Elektromotor 4 befestigt ist, zum Gehäuse 2 gehört. Ebenfalls zum Gehäuse 2 gehört ein Tragelement 13, das in den Hohlzylinder 11 hineinragt und an welchem die zweite Mahlscheibe 14 derart befestigt ist, dass sie koaxial der ersten Mahlscheibe 10 gegenüberliegend ist. Die beiden einander zugewandten Ringflächen der ersten Mahlscheibe 10 und der zweiten Mahlscheibe 14 sind in bekannter Weise mit Schneiden ausgestattet, zudem sind die Mahlscheiben 10 und 14 sphärisch und konisch gestaltet. Auf das Tragelement 13 ist der Trichter 5 aufgesetzt, in welchen die zu mahlenden Kaffeebohnen eingefüllt werden können. Diese Kaffeebohnen gelangen beim Mahlvorgang über eine koaxiale Öffnung 15, die in der zweiten Mahlscheibe 14 angebracht ist, in den durch die beiden Mahlscheiben 10 und 14 gebildeten Mahlspalt 16. Beim Rotieren der ersten Mahlscheibe 10 werden die Kaffeebohnen vom Zentrum zur Peripherie der beiden Mahlscheiben 10 und 14 gefördert, auf diesem Weg werden die Kaffeebohnen zu Kaffeepulver verkleinert. Nicht dargestellte, bekannte Pulverauswerfer, die am Umfang der ersten Mahlscheibe 10 angeordnet sind, schieben das Kaffeepulver zur am Gehäuse 2 angebrachten Wegführöffnung 6, durch welche das gemahlene Kaffeepulver komprimiert weggeführt wird, um beispielsweise in eine Brühkammer einer Kaffeemaschine geleitet zu werden.

Durch ein im Zentrum der ersten Mahlscheibe 10 befestigtes, pilzförmiges Element 17 wird vermieden, dass ein Betreiber dieses Mahlwerks beispielsweise durch den Trichter 5 und die koaxiale Öffnung 15 in den Mahlspalt 16 und damit in die Schneiden der beiden Mahlscheiben 10 und 14 greifen kann.

Wie später noch im Detail beschrieben wird, ist das Tragelement 13 mit den Verstellmitteln 7 verbunden, so dass die Breite des Mahlspalts 16 eingestellt werden kann.

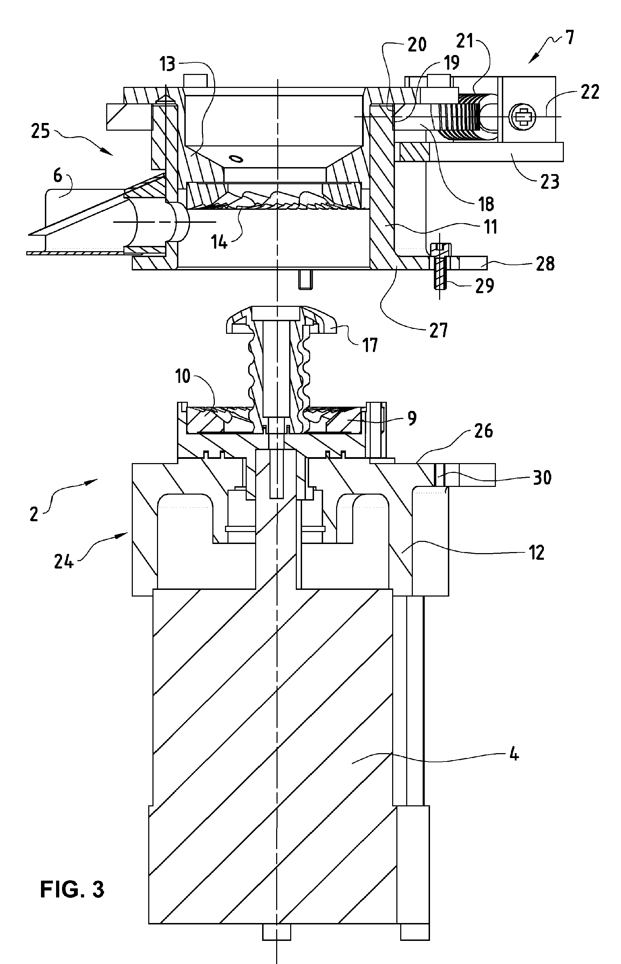

Wie aus Fig. 3 ersichtlich ist, umfassen die Verstellmittel 7 ein Antriebsrad 18, das mit einem Innengewinde 19 ausgestattet ist. Mit diesem Innengewinde 19 ist das Antriebsrad 18 auf ein Aussengewinde 20 aufschraubbar, das an dem Halteteil 12 abgewandten Endbereich des Hohlzylinders 11 angebracht ist. Mit diesem Antriebsrad 18 verbunden ist das Tragelement 13, an welchem die zweite Mahlscheibe 14 befestigt ist. Dieses Antriebsrad 18 ist über ein antreibbares Stellrad 21 verdrehbar, welches um eine Achse 22 drehbar in einem am Hohlzylinder 11 befestigten Bügel 23 gelagert ist. Durch Verdrehen des Antriebsrads 18 wird dieses über das Innengewinde 19 und das Aussengewinde 20 zusammen mit dem Tragelement 13 gegen die erste Mahlscheibe 10 hin bzw. von dieser weg verschoben, wodurch sich der Mahlspalt 16 (Fig. 2) verstellen lässt. Die Verdrehung des Stellrades 21 lässt sich in bekannter, nicht dargestellter Weise von Hand oder maschinell ausführen.

Wie ebenfalls aus Fig. 3 ersichtlich ist, setzt sich das Gehäuse 2 aus einem ersten Teil 24 und einem zweiten Teil 25 zusammen, welche lösbar miteinander verbindbar sind. Der erste Teil 24 des Gehäuses besteht im hier dargestellten Ausführungsbeispiel aus dem Halteteil 12, der zweite Teil 25 des Gehäuses umfasst den Hohlzylinder 11 und das Tragelement 13. Der Halteteil 12 ist hierzu mit einer ersten Anschlagfläche 26 ausgestattet, während die dem Tragelement 13 abgewandte Stirnfläche des Hohlzylinders 11 als zweite Anschlagfläche 27 ausgebildet ist. Im Bereich der Stirnfläche bzw. der zweiten Anschlagfläche 27 des Hohlzylinders 11 sind flanschartige Vorsprünge 28 angebracht, durch welche Schrauben 29 geführt sind, die in entsprechende am Halteteil 12 angebrachte Gewindelöcher 30 einschraubbar sind.

Im zusammengesetzten Zustand des Mahlwerks liegt die zweite Anschlagfläche 27 des Hohlzylinders 11 auf der ersten Anschlagfläche 26 des Halteteils 12 an.

Zum Reinigen oder Durchführen von weiteren Servicearbeiten insbesondere an der ersten Mahlscheibe 10 und an der zweiten Mahlscheibe 14 kann somit der zweite Teil 25 vom ersten Teil 24 des Gehäuses 2 gelöst werden, indem die Schrauben 29 ausgeschraubt werden. Hierzu werden die Verstellmittel 7 nicht betätigt, so dass die zweite Mahlscheibe 14 in ihrer Position nicht verändert werden muss. Nach der Durchführung der entsprechenden Arbeiten kann der zweite Teil 25 des Gehäuses wieder auf den ersten Teil 24 des Gehäuses 2 aufgesetzt werden, die erste Anschlagfläche 26 und die zweite Anschlagfläche 27 kommen zur gegenseitigen Anlage, die Schrauben 29 können wieder eingesetzt werden, das Mahlwerk kann sofort wieder in Betrieb genommen werden, da der Mahlspalt 16 (Fig. 2) die unveränderte voreingestellte Breite aufweist.

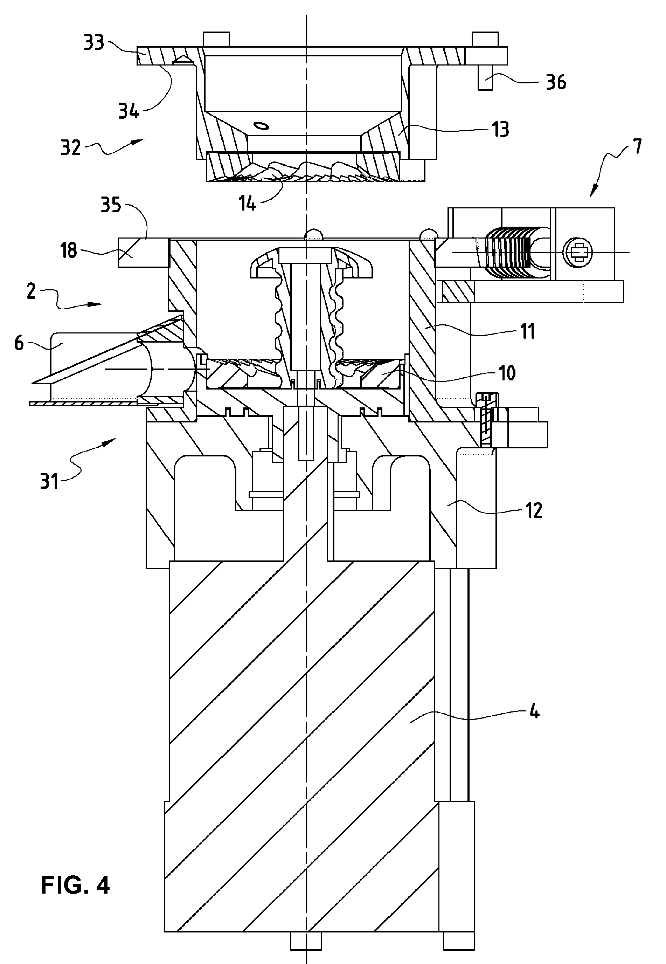

Fig. 4 zeigt eine weitere Ausführungsvariante eines Mahlwerks, dessen Gehäuse 2 trennbar ist. Bei dieser Ausführungsvariante umfasst der erste Teil 31 des Gehäuses 2 den Halteteil 12 und den Hohlzylinder 11, während der zweite Teil 32 des Gehäuses 2 lediglich das Tragelement 13 umfasst. Das Tragelement 13, das die zweite Mahlscheibe 14 trägt, ist mit einem Flansch 33 ausgestattet, dessen dem Hohlzylinder zugewandte Oberfläche die zweite Anschlagfläche 34 bildet. Die erste Anschlagfläche 35 wird durch die obere Fläche des Antriebsrads 18 gebildet.

Zum Verbinden des zweiten Teils 32 mit dem ersten Teil 33 des Gehäuses 2 wird das Tragelement 13 in den Hohlzylinder 11 eingesetzt, bis die zweite Anschlagfläche 34 des Flansches 33 des Tragelements 13 auf der ersten Anschlagfläche 35 des Antriebsrads 18 aufliegt. Zur Verbindung des Tragelements 13 mit dem Antriebsrad 18 sind im Flansch 33 Öffnungen mit eingesetzten Schrauben 36 vorgesehen, welche in entsprechende Gewindelöcher, die im Antriebsrad 18 angeordnet sind, einschraubbar sind.

Zum Trennen des Tragelements 13 von Antriebsrad 18 können somit die Schrauben 36 gelöst werden, das Tragelement 13 kann aus dem Hohlzylinder 11 und vom Antriebsrad 18 abgehoben werden, wie dies in Fig. 4 ersichtlich ist, werden dadurch die beiden Mahlscheiben 10 und 14 zugänglich. Da auch hier zur Durchführung beispielsweise einer Reinigung der Mahlscheiben die Verstellmittel 7 nicht verstellt werden, erhält man beim Zusammensetzen des ersten Teils 31 mit dem zweiten Teil 32 des Gehäuses wieder die genau gleiches Einstellung des Mahlspaltes, das Mahlwerk liefert somit wieder ein identisches Kaffeepulvers, wie vor der Trennung des Gehäuses 2.

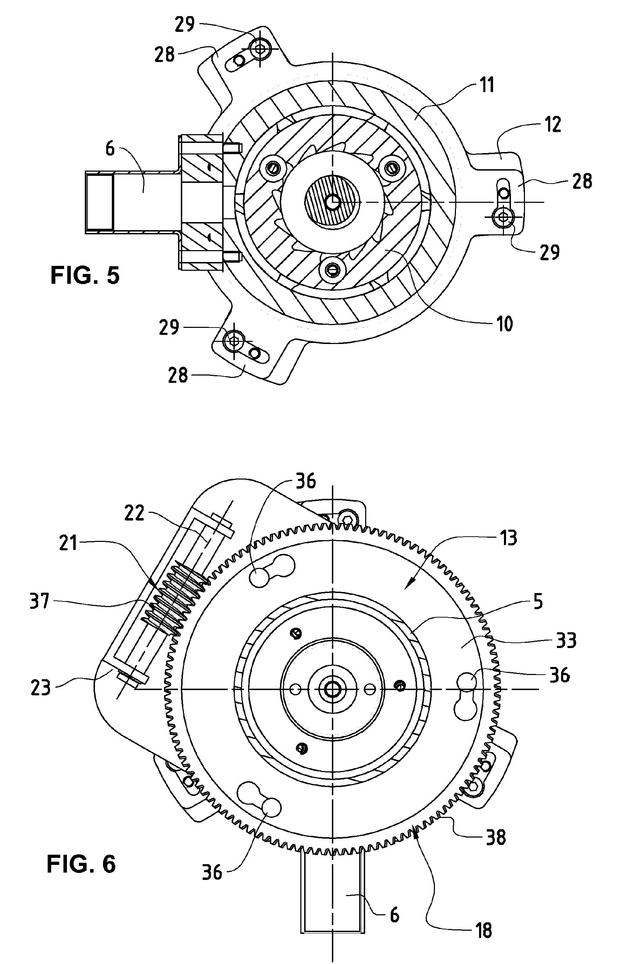

Aus der Schnittdarstellung gemäss Fig. 5 durch den Hohlzylinder 11 sind die flanschartigen Vorsprünge 28 des Hohlzylinders 11 ersichtlich, in welche die Schrauben 29 eingesetzt sind, mit welchen der Hohlzylinder 11 mit dem Halteteil 12 verbindbar ist.

Die Schnittdarstellung durch den Trichter gemäss Fig. 6 zeigt den Flansch 33 des Tragelements 13, der mittels Schrauben 36 mit dem Antriebsrad 18 verbindbar ist. Ebenfalls ersichtlich ist das Stellrad 21, das um die Achse 22 drehbar im Bügel 23 gehalten ist, wobei dieses Stellrad 21 als Schnecke 37 ausgebildet ist, während das Antriebsrad 18 als Schneckenrad 38 ausgebildet ist.

Die in Fig. 3 dargestellte Ausgestaltung einer Trennmöglichkeit eines Mahlwerks und die in Fig. 4 dargestellte Ausgestaltung einer Trennmöglichkeit eines Mahlwerks können jeweils einzeln in einem Mahlwerk angebracht sein, selbstverständlich ist es auch denkbar, dass die beiden Trennmöglichkeiten in einem Mahlwerk gemeinsam angeordnet sind.

Mit diesem erfindungsgemässen Mahlwerk wird die Möglichkeit geboten, eine optimale Zugänglichkeit auf die beiden Mahlscheiben zu schaffen, wobei nach dem Zusammensetzen des Mahlwerks der Mahlspalt zwischen den beiden Mahlscheiben eine genau gleiche Breite aufweist, wie sie vor dem Öffnen des Mahlwerks eingestellt war. Dadurch kann dieses Mahlwerk nach den daran auszuführenden Arbeiten nach dem Zusammensetzen sofort wieder in Betrieb genommen werden, das gemahlene Kaffeepulver entspricht genau dem Kaffeepulver, das vor der Zerlegung des Mahlwerks ausgegeben wurde. Dadurch erhält man auch nach beispielsweise einem Reinigungsvorgang Kaffee mit demselben Geschmack, wie vor der Reinigung.

## Patentansprüche

1. Mahlwerk für eine Kaffeemaschine, umfassend ein Gehäuse (2), in welchem eine erste Mahlscheibe (10) angeordnet ist, welche über Antriebsmittel (3) um eine Rotationsachse (8) antreibbar ist, eine zweite Mahlscheibe (14), welche nicht rotierend im Gehäuse (2) angeordnet ist, Verstellmittel (7), über welche die beiden Mahlscheiben (10, 14) gegeneinander anstellbar sind und der Mahlspalt (16) veränderbar ist, eine Zuführöffnung für die Zuführung der zu mahlenden Kaffeebohnen und eine Wegführöffnung (6) für das Wegführen des zwischen den beiden Mahlscheiben (10, 14) gemahlenen Kaffeepulvers, **dadurch gekennzeichnet, dass** das Gehäuse (2) aus mindestens einem ersten Teil (24; 31) und einem zweiten Teil (25; 32) gebildet ist, die miteinander lösbar verbunden sind und die jeweils mit einer ersten Anschlagfläche (26; 35) bzw. einer zweiten Anschlagfläche (27; 34) ausgestattet sind, die im verbundenen Zustand aneinander stossen, dass die erste Mahlscheibe (10) und die Antriebsmittel (3) im ersten Teil (24; 31) des Gehäuses (2) angeordnet sind und dass die zweite Mahlscheibe (14) und die Verstellmittel (7) am zweiten Teil (25; 32) des Gehäuses (2) angeordnet sind.

2. Mahlwerk nach Anspruch 1, **dadurch gekennzeichnet, dass** das Gehäuse (2) einen Hohlzylinder (11), welcher die Mahlkammer bildet und in welchem die Wegführöffnung (6) angeordnet ist, einen Halteteil (12), an welchem die Antriebsmittel (3) angebracht sind, und ein Tragelement (13) umfasst, das in den Hohlzylinder (11) hineinragt und einen Aufnahmebereich für die zweite Mahlscheibe (14) aufweist.

3. Mahlwerk nach Anspruch 2, **dadurch gekennzeichnet, dass** die Antriebsmittel (3) aus einem Elektromotor (4) bestehen, welcher auf den Halteteil (12) aufgeflanscht ist, an dessen Antriebsachse (8) ein Aufnahmeteil (9) befestigt ist, in welchen die erste Mahlscheibe (10) einsetzbar ist und welcher in den Hohlzylinder (11) hineinragt.

4. Mahlwerk nach Anspruch 2 oder 3, **dadurch gekennzeichnet, dass** die Verstellmittel (7) ein Antriebsrad (18) umfassen, das mit einem Innengewinde (19) ausgestattet ist und auf ein Aussengewinde (20) aufschraubbar ist, das am dem Halteteil (12) abgewandten Endbereich des Hohlzylinders (11) angebracht ist, an welchem Antriebsrad (18) das Tragelement (13) mit einem Aufnahmebereich für die zweite Mahlscheibe (14) angebracht ist.

5. Mahlwerk nach Anspruch 4, **dadurch gekennzeichnet, dass** die Verstellmittel (7) ferner ein antreibbares Stellrad (21) umfassen, welches um eine Achse (22) drehbar in einem am Hohlzylinder (11) befestigten Bügel (23) gelagert ist und mit dem Antriebsrad (18) zusammenwirkt.

6. Mahlwerk nach Anspruch 5, **dadurch gekennzeichnet, dass** das Antriebsrad (18) als Schneckenrad (38) und das Stellrad (21) als Schnecke (37) ausgebildet sind.

7. Mahlwerk nach einem der Ansprüche 2 bis 6, **dadurch gekennzeichnet, dass** der erste Teil (24) des Gehäuses (2) durch den Halteteil (12) gebildet ist, an welchem die ersten Anschlagflächen (26) vorgesehen sind, und der zweite Teil (25) des Gehäuses (2) durch den Hohlzylinder (11) und das Tragelement (13) gebildet sind, und dass die dem Tragelement (13) abgewandte Stirnfläche des Hohlzylinders (11) die zweite Anschlagfläche (27) bildet, und dass im verbundenen Zustand des ersten Teils (24) und des zweiten Teils (25) des Gehäuses (2) die erste Anschlagfläche (26) und die zweite Anschlagfläche (27) aufeinander zu liegen kommen.

8. Mahlwerk nach Anspruch 7, **dadurch gekennzeichnet, dass** am Hohlzylinder (11) im Bereich der Stirnfläche flanschartige Vorsprünge (28) angebracht sind und dass die Verbindung mit dem ersten Teil (24) des Gehäuses (2) mittels durch die flanschartigen Vorsprünge (28) geführte Schrauben (29) erreichbar ist, welche in entsprechnd am Halteteil (12) angebrachte Gewindelöcher (30) einschraubbar sind.

9. Mahlwerk nach einem der Ansprüche 2 bis 6, **dadurch gekennzeichnet, dass** der erste Teil (31) des Gehäuses durch den Halteteil (12) und den Holzylinder (11) gebildet ist und am auf den Hohlzylinder (11) aufschraubbaren Antriebsrad (18) die ersten Anschlagflächen (35) angebracht sind, und der zweite Teil (32) des Gehäuses (2) durch das Tragelement (13) gebildet ist, dessen dem Antriebsrad (18) zugewandte Fläche die zweite Anschlagfläche (34) bildet, und dass im verbundenen Zustand des ersten Teils (31) und zweiten Teils (32) des Gehäuses (2) die erste Anschlagfläche (35) und die zweite Anschlagfläche (34) aufeinander zu liegen kommen.

10. Mahlwerk nach Anspruch 9, **dadurch gekennzeichnet, dass** das Tragelement (13) mit einem Flansch (33) versehen ist, welcher die zweite Anschlagfläche (34) bildet.

11. Mahlwerk nach Anspruch 10, **dadurch gekennzeichnet, dass** die Verbindung zwischen dem Flansch (33) des Tragelements (13) und dem Antriebsrad (18) mittels Schrauben (36) erfolgt.
